# EUROPEAN PATENT APPLICATION

(11) **EP 4 550 115 A1**
(43) Date of publication of application: **07.05.2025**
(21) Application number: 24208455.6
(22) Date of filing: 23.10.2024
(51) Int. Cl.: G06F 8/30, G06F 8/33, G06F 8/73, G06F 8/74, G06F 8/75

(54) **INTEGRATED DESIGN ENVIRONMENT CODE GENERATION ASSISTANT**

(30) Priority: 30.10.2023 US 202318497191
(71) Applicant: Rockwell Automation Technologies, Inc., Mayfield Heights, OH 44124 (US)
(72) Inventor: Patel, Rahul, Mayfield Heights, Ohio 44124 (US); Fernandes, Fabiano, Mayfield Heights, Ohio 44124 (US); Stanek, Christopher E., Mayfield Heights, Ohio 44124 (US); Ohlsen, Michael J., Mayfield Heights, Ohio 44124 (US); Pantea, Adrian D., Mayfield Heights, Ohio 44124 (US); Hays, Christopher, Mayfield Heights, Ohio 44124 (US); Carrara, Anthony, Mayfield Heights, Ohio 44124 (US); Majewski, Lorenzo P., Mayfield Heights, Ohio 44124 (US); Stuart, Shawn O., Mayfield Heights, Ohio 44124 (US); Mathson, Kurt E., Mayfield Heights, Ohio 44124 (US); Anand, Ashish, Mayfield Heights, Ohio 44124 (US); Shea, Matthew J., Mayfield Heights, Ohio 44124 (US); Rosu, Allen, Mayfield Heights, Ohio 44124 (US)
(74) Representative: Grünecker Patent- und Rechtsanwälte PartG mbB

(57) **Abstract**

An integrated development environment (IDE) leverages a generative AI model to generate industrial control code in accordance with specified functional requirements, which can be provided to the industrial IDE system as intuitive natural language spoken or written text. The industrial IDE can also analyze written code in response to natural language prompts submitted against the code, generate answers to user-submitted questions about the code, and offer recommendations for improving the code in response to specific questions or requests submitted by the user.

## Description

### TECHNICAL FIELD

The subject matter disclosed herein relates generally to industrial automation systems, and, for example, to industrial programming development platforms.

### BACKGROUND ART

The various control, monitoring, and analytical devices that make up an industrial environment are typically programmed or configured using respective configuration applications specific to each type of device. For example, industrial controllers are typically configured and programmed using a control programming development application such as a ladder logic editor. Using such development platforms, a designer can write control programming for carrying out a desired industrial sequence or process and download the resulting program files to the controller.

The conventional approach to configuring and programming industrial devices to carry out prescribed manufacturing processes requires not only specialized knowledge of the programming languages and device configuration settings used to configure the devices, but also an expert understanding of industrial control process in general, including knowledge of common industrial standards and specifics of various types of automation applications. This restricts the development of industrial control projects to those engineers having the required level of specialist knowledge, and also extends the time required to develop industrial control solutions.

### BRIEF DESCRIPTION

The following presents a simplified summary in order to provide a basic understanding of some aspects described herein. This summary is not an extensive overview nor is intended to identify key/critical elements or to delineate the scope of the various aspects described herein. Its sole purpose is to present some concepts in a simplified form as a prelude to the more detailed description that is presented later.

In one or more embodiments, a system is provided, comprising a user interface component configured to receive, as natural language input, a prompt comprising a request for control code for an industrial system project in development, wherein the request specifies one or more requirements of the control code; a generative AI component configured to perform contextual analysis on the industrial system project to determine at least one of a type of industrial application or an industrial vertical for which the industrial system project is being developed, and to generate, using the generative AI model, control code inferred to satisfy the one or more requirements based on analysis of the prompt and a result of the contextual analysis; and a project generation component configured to integrate the control code into the industrial system project.

Also, one or more embodiments provide a method, comprising receiving, as natural language input by an industrial integrated development environment (IDE) system comprising a processor, a prompt comprising a request for control code for an industrial system project being developed, wherein the request specifies one or more requirements of the control code; performing, by the industrial IDE system using a generative artificial intelligence (AI) model, contextual analysis on the industrial system project to determine at least one of a type of industrial application or an industrial vertical for which the industrial system project is being developed; generating, by the industrial IDE system using the generative AI model, control code determined to satisfy the one or more requirements based on analysis of the prompt and a result of the contextual analysis; and integrating, by the industrial IDE system, the control code into the industrial system project.

Also, according to one or more embodiments, a non-transitory computer-readable medium is provided having stored thereon instructions that, in response to execution, cause an industrial integrated development environment (IDE) to perform operations, the operations comprising receiving a natural language prompt requesting control code for an industrial system project being developed, wherein the natural language prompt describes one or more requirements of the control code; performing, using a generative artificial intelligence (AI) model, contextual analysis on the industrial system project to determine at least one of a type of industrial application or an industrial vertical for which the industrial system project is being developed; generating, using the generative AI model, control code that satisfies the one or more requirements based on analysis of the prompt and a result of the contextual analysis; and integrating the control code into the industrial system project.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 is a block diagram of an example integrated development environment (IDE) system.
FIG. 3 is a diagram illustrating example data flows associated with creation of a system project for an automation system being designed using IDE system.
FIG. 4 is a diagram illustrating commissioning of a system project.
FIG. 5 is an example project development interface that can be rendered by one or more embodiments of the industrial IDE system.
FIG. 6 is a view of the project development interface in which a user has begun developing industrial control code via interaction with the interface's workspace canvas.
FIG. 7 is another view of the project development interface in which the user has invoked a generative AI copilot window.
FIG. 8 is a view of the example copilot window in isolation.
FIG. 9 is a view of the copilot window illustrating use of the generative AI copilot to generate code based on a user's natural language prompts.
FIG. 10 is a view of the development interface depicting integration of the generated control code into the user's control code.
FIG. 11 is a diagram illustrating generative AI analysis of control code submitted to the IDE system.
FIG. 12a is a flowchart of a first part of an example methodology for using generative AI to assist in creation of industrial control code within an industrial IDE system.
FIG. 12b is a flowchart of a second part of the example methodology for using generative AI to assist in creation of industrial control code within an industrial IDE system.
FIG. 13 is a flowchart of an example methodology for using a generative AI model to respond to user's natural language prompts submitted against industrial control code.
FIG. 14 is an example computing environment.
FIG. 15 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

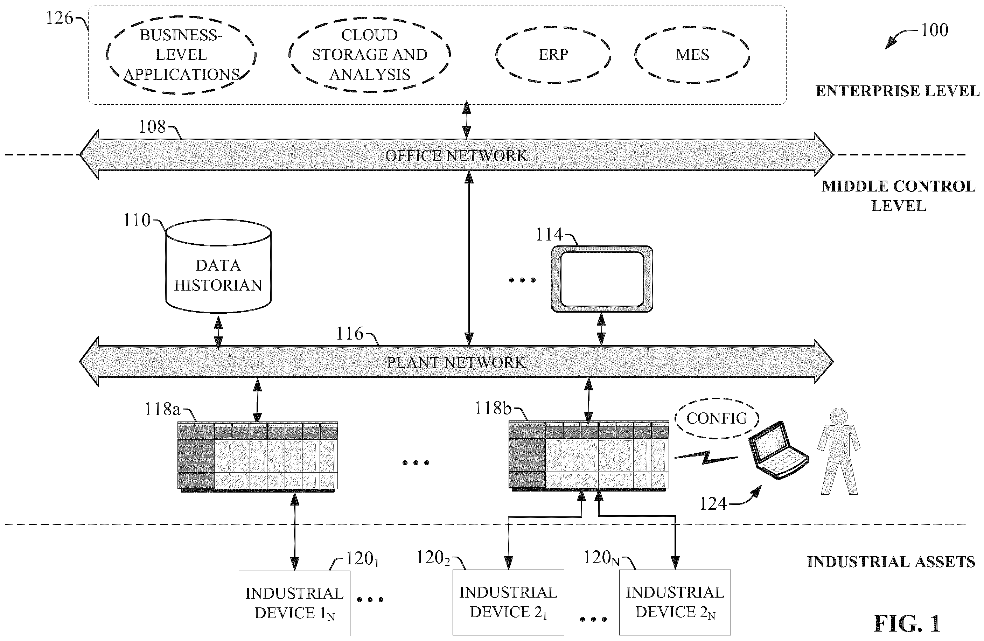

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise substantially any type of code capable of processing input signals read from the industrial devices 120 and controlling output signals generated by the industrial controllers 118, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, pumps, and the like.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over a network using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by their associated control programs and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, a data historian 110 that aggregates and stores production information collected from the industrial controllers 118 or other data sources, device documentation stores containing electronic documentation for the various industrial devices making up the controlled industrial systems, inventory tracking systems, work order management systems, repositories for machine or process drawings and documentation, vendor product documentation storage, vendor knowledgebases, internal knowledgebases, work scheduling applications, or other such systems, some or all of which may reside on an office network 108 of the industrial environment.

Higher-level systems 126 may carry out functions that are less directly related to control of the industrial automation systems on the plant floor, and instead are directed to long term planning, high-level supervisory control, analytics, reporting, or other such high-level functions. These systems 126 may reside on the office network 108 at an external location relative to the plant facility, or on a cloud platform with access to the office and/or plant networks. Higher-level systems 126 may include, but are not limited to, cloud storage and analysis systems, big data analysis systems, manufacturing execution systems, data lakes, reporting systems, etc. In some scenarios, applications running at these higher levels of the enterprise may be configured to analyze control system operational data, and the results of this analysis may be fed back to an operator at the control system or directly to a controller 118 or device 120 in the control system.

The various control, monitoring, and analytical devices that make up an industrial environment are typically programmed or configured using respective configuration applications specific to each type of device. For example, industrial controllers 118 are typically configured and programmed using a control programming development application such as a ladder logic editor (e.g., executing on a client device 124). Using such development platforms, a designer can write control programming (e.g., ladder logic, structured text, function block diagrams, etc.) for carrying out a desired industrial sequence or process and download the resulting program files to the controller 118.

The conventional approach to configuring and programming industrial controllers 118 to carry out prescribed manufacturing processes requires not only specialized knowledge of the programming languages and device configuration settings used to configure the controllers, but also an expert understanding of industrial control process in general, including knowledge of common industrial standards and specifics of various types of automation applications. This restricts the development of industrial control projects to those engineers having the required level of specialist knowledge, and also extends the time required to develop industrial control solutions.

To address at least some of these or other issues, one or more embodiments described herein provide an integrated development environment (IDE) for designing, programming, and configuring aspects of an industrial automation system using generative artificial intelligence (AI) techniques. Embodiments of the industrial IDE can us a generative AI model to generate industrial control code in accordance with specified functional requirements, which can be provided to the industrial IDE system as intuitive natural language spoken or written text. In general, the industrial IDE can analyze written code in response to natural language prompts submitted against the code, generate answers to user-submitted questions about the code, and offer recommendations for improving the code in response to specific questions or requests submitted by the user.

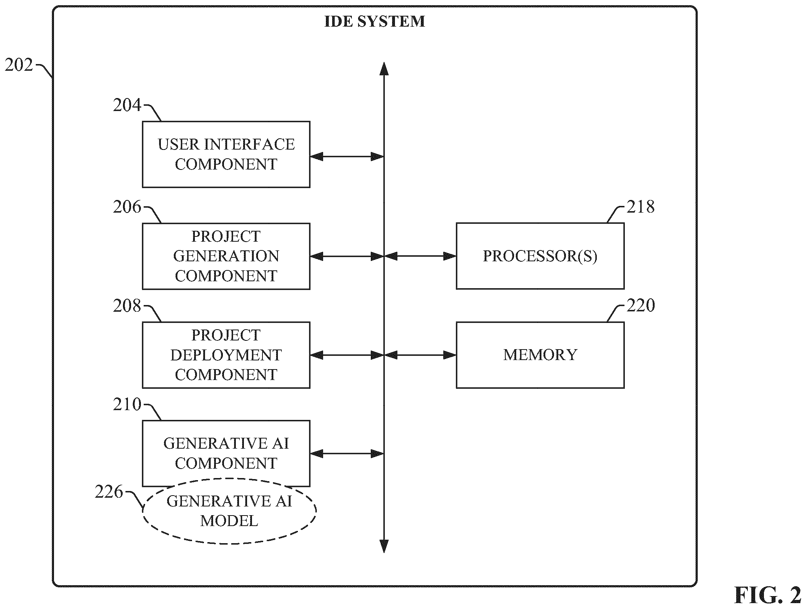

FIG. 2 is a block diagram of an example integrated development environment (IDE) system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

IDE system 202 can include a user interface component 204, a project generation component 206, a project deployment component 208, a generative AI component 210, one or more processors 218, and memory 220. In various embodiments, one or more of the user interface component 204, project generation component 206, project deployment component 208, generative AI component 210, the one or more processors 218, and memory 220 can be electrically and/or communicatively coupled to one another to perform one or more of the functions of the IDE system 202. In some embodiments, components 204, 206, 208, and 210 can comprise software instructions stored on memory 220 and executed by processor(s) 218. IDE system 202 may also interact with other hardware and/or software components not depicted in FIG. 2. For example, processor(s) 218 may interact with one or more external user interface devices, such as a keyboard, a mouse, a display monitor, a touchscreen, or other such interface devices.

User interface component 204 can be configured to receive user input and to render output to the user in any suitable format (e.g., visual, audio, tactile, etc.). In some embodiments, user interface component 314 can be configured to generate and serve interface screens to a client device (e.g., a laptop computer, tablet computer, smart phone, etc.), and exchange data via these interface screens. Input data that can be received via various embodiments of user interface component 204 can include, but is not limited to, natural language chat input or prompts, control programming in a text-based or graphical format, industrial design specifications or goals submitted in various formats (e.g., natural language text etc.), or other such input. Output data rendered by various embodiments of user interface component 204 can include natural language responses to chat input or prompts, industrial control code, answers to user-submitted questions or requests, programming suggestions, or other such outputs.

Project generation component 206 can be configured to create a system project comprising one or more project files based on design input received via the user interface component 204, assisted by application of generative AI. The project files include at least industrial control code that, when executed on an industrial controller 118, facilitate monitoring and controlling an industrial automation system in accordance with the control routines defined by the control code. Project deployment component 208 can be configured to commission the system project created by the project generation component 206 to appropriate industrial devices (e.g., industrial controllers 118 or another type of industrial device capable of executing the control code, etc.) for execution.

Generative AI component 210 can be configured to assist the project generation component 206 in generating portions of the system project - including generating industrial control code and device configuration settings, etc. - using generative AI. To this end, the generative AI component 210 can leverage a generative AI model 226 in connection with prompting a designer for information that can be used to accurately ascertain the functional requirements for the industrial control system being designed, and generating the relevant portions of the system project to align with the functional requirements gleaned from the designer's input. The generative AI component 210 can also generate responses to questions or requests submitted by the user as natural language prompts against existing control code or routines.

The one or more processors 218 can perform one or more of the functions described herein with reference to the systems and/or methods disclosed. Memory 220 can be a computer-readable storage medium storing computer-executable instructions and/or information for performing the functions described herein with reference to the systems and/or methods disclosed.

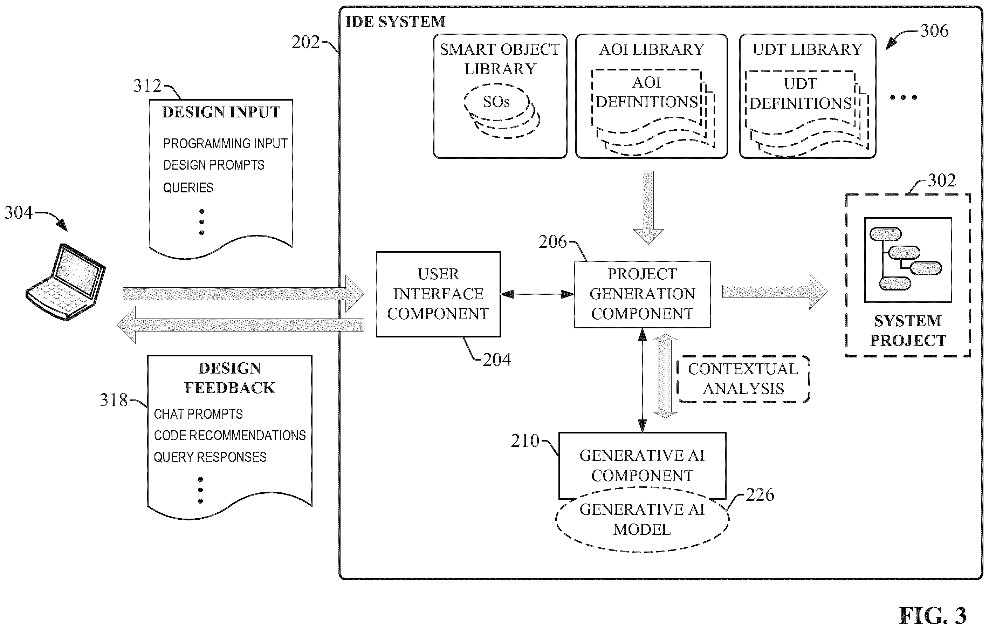

FIG. 3 is a diagram illustrating example data flows associated with creation of a system project 302 for an automation system being designed using IDE system 202 according to one or more embodiments. Some embodiments of the IDE system 202 can be implemented on a cloud platform and made accessible to multiple industrial customers having authorized access to use the IDE system's services. Cloud-based implementations can also facilitate collaborative project development whereby multiple developers contribute design and programming input to a common automation system project. Alternatively, some embodiments of IDE system 202 may execute at least partially on a local client device while accessing remote services and repositories as needed.

A client device 304 (e.g., a laptop computer, tablet computer, desktop computer, mobile device, wearable AR/VR appliance, etc.) owned by a user with suitable authentication credentials can access the IDE system's project development tools and leverage these tools to create a system project 302 - including industrial control code, device configuration settings, or other such aspects of an industrial control project - for an automation system being developed. Through interaction with development interfaces generated by the system's user interface component 204 (examples of which will be described herein), developers can submit design input 312 to the IDE system 202 in various supported formats. Design input 312 can include explicit control programming entered by the user in a text-based or graphical format (e.g., ladder logic, structured text, sequential function charts, a domain-specific language, etc.) as well as device configuration parameter definitions to be downloaded to a corresponding device, such as an industrial controller 118.

Additionally, the IDE system's development services can include a control code generation copilot that leverages generative AI to assist the user in creating control code for an industrial application, as well as to search for answers to specific questions relating to the control code or its development. The copilot can include a generative AI component 210 that responds to natural language prompts submitted by the user as part of design input 312. These prompts can comprise, for example, descriptions of functional requirements of the control code being developed, questions about existing control code, requests for programming recommendations, questions regarding programming instructions that are available to solve a specified problem, or other such prompts. Depending on the nature of the prompt, the generative AI component 210 can generate control code recommendations for consideration by the developer, answers to questions about the control code or about programming tools that are available as part of the IDE system's development platform, or other such content designed to assist the user in developing or learning about control code.

The generative AI component 210 can leverage various libraries 306 or other information repositories in connection with generating control code or information that aligns with the user's needs, as inferred from the user's natural language prompts. These libraries 306 can include, but are not limited to, libraries of add-on instructions (AOIs) or other program instructions that that encode control or computational functionality and that can be added as elements to control routines, libraries of control code samples or smart objects that encapsulate reusable control code, libraries of user-defined data types (UDTs), libraries of product manuals for various types industrial devices or software platforms (including programming or instruction manuals for the IDE system's control code development platform, as well as vendor-specific device manuals), help files, vendor knowledgebases, training materials, industrial standards definitions, or other such libraries. The content of these libraries 306 can be referenced by the generative AI component 210 in connection with processing a user's prompt, or can be used to train the generative AI model 226 to accurately process the user's design prompts.

Based on the user's design input 312, user interface component 204 can render design feedback 312 designed to assist the developer in connection with developing a system project 302. At least some of this design feedback can comprise chat prompts generated by the generative AI component 210 requesting specific items of information from the user (e.g., as part of an iterative dialogue with the user intended to ascertain the user's design requirements), recommendations for control code that satisfies the user's design requirements, responses to questions submitted by the user about control code or the IDE system's programming tools, or other such feedback.

The generative AI model 226 can also be trained with industry-specific knowledge of various types of industrial control applications, and can leverage this trained knowledge in connecting with assisting the user with development of the system project 302. For example, the generative AI component 210 can perform contextual analysis on control code being developed by the user, or that has been submitted to the IDE system 202 for analysis. This contextual analysis can infer, based on the training of the model 226, a type of industrial application to which the control code is directed (e.g., a type of batch processing, web tension control, conveyor control, a die casting application, valve control, sheet metal stamping, etc.) or an industrial vertical for which the control code is being developed (e.g., food and beverage, pharmaceuticals, automotive, textiles, mining, aerospace, marine, die casting, etc.). Based on this contextual information, the generative AI component 210 can generate recommendations for additional control code (or edits to portions of the control code already developed) that fulfills control functionality known to be required for the type of control application being programmed, or that aligns with prescribed functional, safety, or programming standards defined for the industrial vertical for which the project 302 is being developed. The generative AI component 210 can also use this contextual information to accurately answer questions about the system project 302 and its associated control code submitted by the user as a natural language prompt.

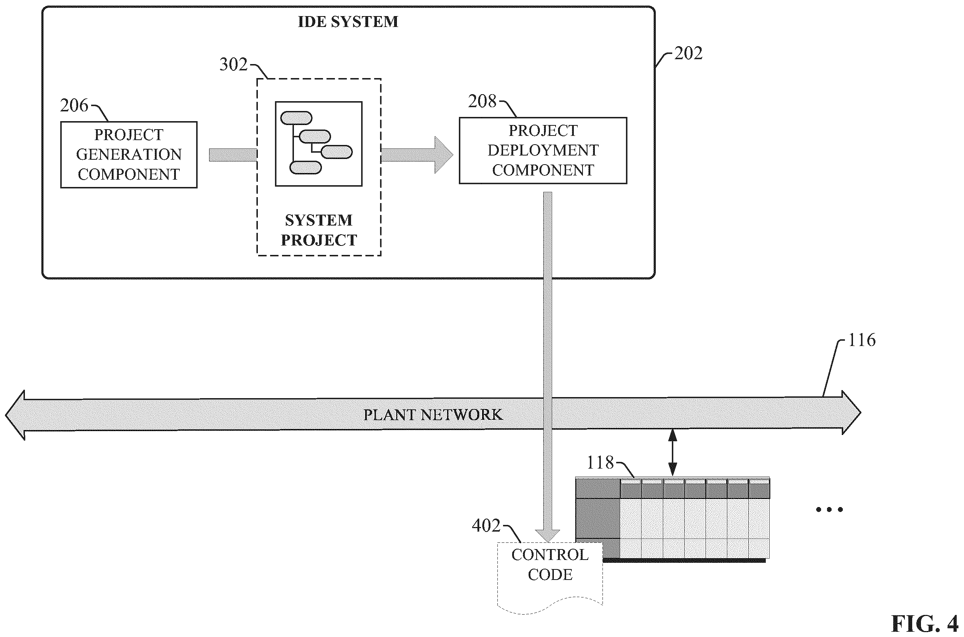

When a fully developed system project 302 for an automation system has been completed, the system project 302 can be deployed to one or more target control devices for execution. FIG. 4 is a diagram illustrating commissioning of a system project 302. Project deployment component 208 can compile or otherwise translate a completed system project 302 into one or more executable files or configuration files that can be stored and executed on respective target industrial devices of the automation system (e.g., industrial controllers 118, or other types of industrial devices such as motor drives, safety relays, etc.).

As noted above, system project 302 may comprise one or more of control code, device parameter definitions, or other such control project elements. Upon completion of project development, a user can identify which target device - e.g., an industrial controller 118 - is to execute or receive the system project 302. Project deployment component 208 can then translate controller code defined by the system project 302 to a control program file 402 formatted for execution on the specified industrial controller 118 and send this control program file 402 to the controller 118 (e.g., via plant network 116) for execution. Execution of the control program file 402 on the controller 118 causes the controller 118 to perform monitoring and control functions for an industrial automation system in accordance with the control code and device configuration settings defined by the system project 302.

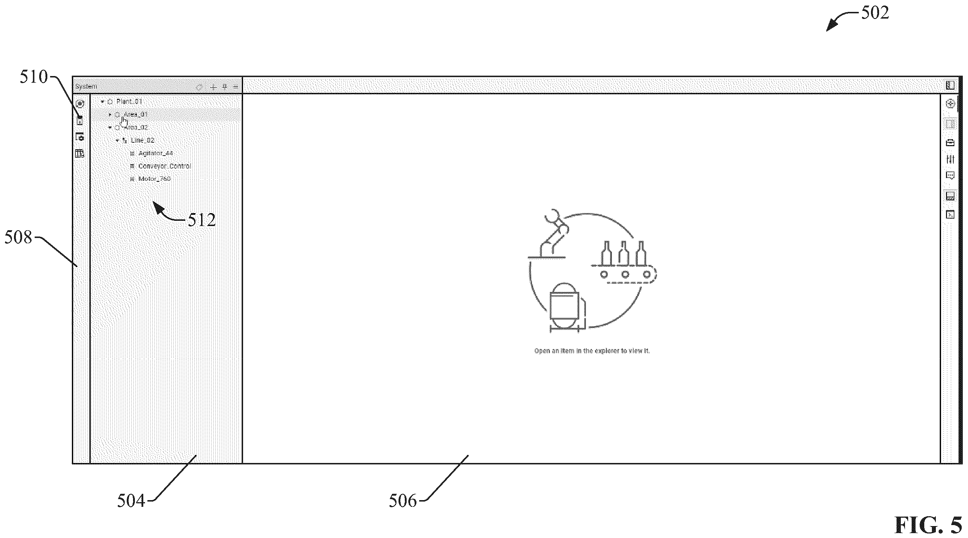

FIG. 5 is an example project development interface 502 that can be rendered by one or more embodiments of the industrial IDE system's user interface component 204. Development interface 502 is organized into panels and workspaces and includes interactive development tools that assist a user in developing control system projects 302, including industrial control code to be executed on one or more industrial controllers. The example project development interface 502 depicted in FIG. 5 comprises a workspace canvas 506 and an explorer panel 504 pinned to the left of the workspace canvas 506. Explorer panel 504 serves as a means for navigating and viewing content of a control project 302. The Explorer panel 504 itself supports different viewing categories, which are represented by selectable explorer icons 510 rendered on an explorer view control bar 508 pinned to the left-side edge of the Explorer panel 504. Selection of an explorer icon 510 determines one or both of the type of project content to be browsed via the Explorer panel 504 or a format in which the browsable project content is rendered on the Explorer panel 504.

The explorer panel 504 displays a system view navigation tree 512 comprising hierarchical nodes representing automation systems that include one or more industrial controllers. The nodes are given user-defined names and are organized in the navigation tree 512 according to a user-defined hierarchical organizational schema to assist the user in locating a desired automation system in the tree 512. The tree 512 can include automation system nodes representing the automation systems (e.g., "Line_02"), which can be classified under one or more other hierarchical location nodes (e.g., city nodes, plant nodes, line nodes, etc.) representing the locations of the automation systems. The user can browse these various nodes to locate a desired automation system.

Selection of one of the automation system nodes of the navigation tree 512 causes content of the control project 302 associated with the corresponding automation system to be rendered in the workspace canvas 506. If content has already been created for the selected automation system - e.g., control programming, data tag definitions, controller definitions, etc. - this content will be displayed for viewing and editing in the workspace canvas 506. If new control programming is to be created for the selected automation system, the user can begin developing control logic and defining industrial controllers for the automation system via interaction with the workspace canvas 506. In some embodiments, the control programming and data tag definitions that are to be installed and executed on the automation system's controllers can be developed in the IDE environment without initially binding the control programming to a specific controller definition, allowing the control code development to be decoupled from its hardware implementation until the user is ready to allocate the control code - e.g., as a smart object instance- to a selected controller 118.

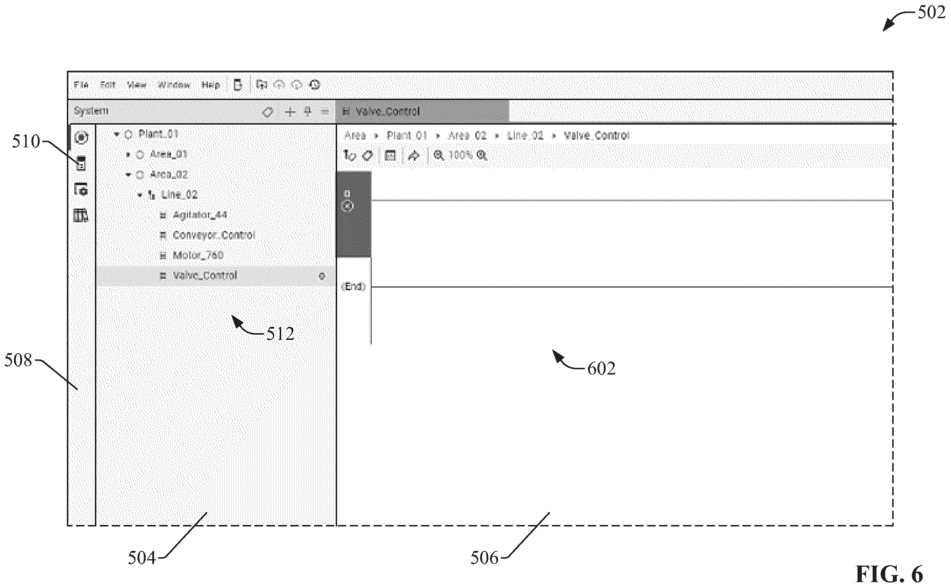

FIG. 6 is a view of the project development interface 502 in which a user has begun developing industrial control code 602 via interaction with the workspace canvas 506. According to an example workflow, the user can create a Routine node as a child of an Automation System node in the navigation tree 512. The Routine node represents a routine of a control program to be executed by a controller 118 to facilitate monitoring and control of the automation system represented by the parent Automation System node. With the Routine node selected, the user can develop control code 602 for the routine via interaction with the workspace canvas 506. The interface 502 can allow the user to selectively view and write the control program in either a text-based format or a graphical format such as ladder logic (FIG. 6 depicts a ladder logic view of a control program in progress).

At any time during the control code development process, the user can prompt the IDE system's generative AI model 226 for assistance in developing the control code 602. For example, the generative AI component 210, using its generative AI model 226, can generate code that satisfies design requirements specified by the user's natural language prompts, generate recommendations for modifying existing control code in a manner that addresses issues specified by the user's prompts, provide answers to the user's questions about the control code or about the programming platform itself, or provide other such assistance.

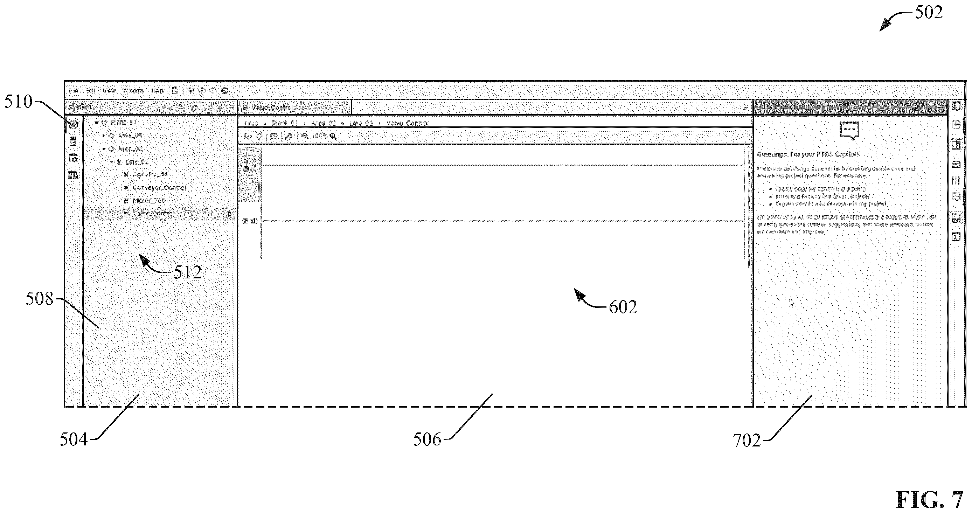

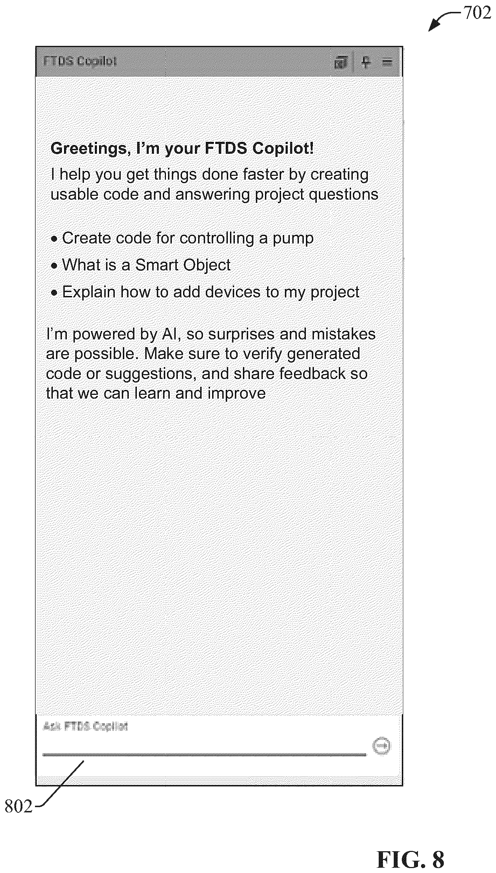

FIG. 7 is another view of the project development interface 502 in which the user has invoked a generative AI copilot window 702, through which the user can exchange prompts with the generative AI model 226. FIG. 8 is a view of the example copilot window 702 in isolation. In the illustrated example, the copilot window 702 is a chat window pinned to the right of the workspace canvas 506. However, any type of generative AI interface can be used to exchange prompts with the IDE system's generative AI model 226. The copilot window 702 displays a text summary explaining the types of assistance that the generative AI model 226 can provide, and a data entry field 802 in which the user can enter natural language prompts.

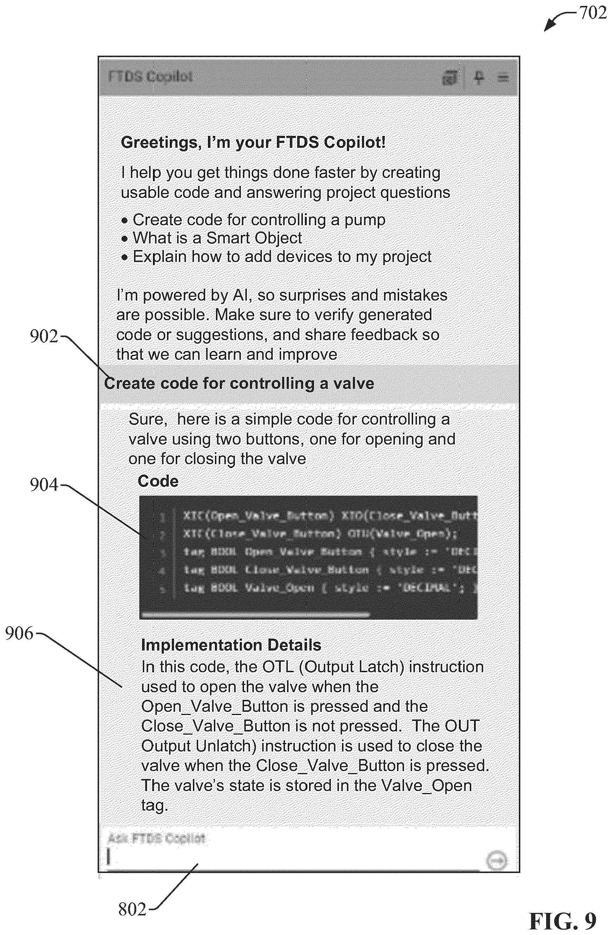

FIG. 9 is a view of the copilot window 702 illustrating use of the generative AI copilot to generate code based on a user's natural language prompts. A user can enter, in data entry field 802, a prompt comprising a natural description of control code required for a system project 302 currently being developed. This natural language prompt can provide such information as a functional requirement for the code, types of equipment to be controlled by the code, a desired format for the code, or other such descriptors. In the example illustrated in FIG. 9, the user has entered the prompt "Create code for controlling a valve." In response to submission of this prompt, the generative AI component 210, using its generative AI model 226 and leveraging any appropriate libraries 306, can generate one or more examples of control code determined to satisfy the requirements set forth in the prompt. When displaying a control code recommendation in response to a user's prompt, the copilot window 702 can display the user's original prompt in a prompt window 902, the recommended control code in code window 904, and natural language implementation details 906 that provide additional information or context about the recommended control code. Example implementation details 906 can describe how the code functions, the purpose of the various instructions or data tags contained in the code (e.g., "In this code, the OTL (Output Latch) instruction used to open the valve when the Open_Valve_Button is pressed and the Close_Valve_Button is not pressed. The OUT (Output Unlatch) instruction is used to close the valve when the Close_Valve_Button is pressed. The valve's state is stored in the Valve Open tag."), suggestions for integrating the recommended control code into the user's in-progress control routine or system project 302, or other such information.

The generative AI component 210 can also use the generative AI model 226 to embed documentation or comments within the generated code. This embedded documentation can include, for example, natural language descriptions of the functions of respective portions of the control code (e.g., ladder logic rung comments, comment lines included in the text-based view of the code, etc.), names of variables used in the control code (e.g., a description of the variable's function, or the metric represented by the variable's value), instructions for using the code, or other such documentation. The generative AI component 210 can generate at least some of the embedded documentation based on natural language functional descriptions included in the user's original prompt, appending portions of the user's descriptions (or modified variations of those descriptions) into the code where appropriate. The generative AI component 210 can also generate portions of this program documentation based in part on content stored in one or more of the libraries 306 referenced by the model 226 (e.g., pre-written documented control code samples, device documentation, standards documentation, etc.).

In some scenarios, the user may request modifications or edits to the model's recommended control code prior to integrating the code into the main system project 302. These requests can also be submitted as follow-up natural language prompts via data entry field 802. In this way, the user can carry out a dialog exchange with the generative AI model 226 that iteratively refines the recommended control code in accordance with the user's needs. As an example modification that can be requested via a natural language prompt, the user may request that an instruction type included in the recommended code be replaced by another specified instruction (e.g., "Change the OTL and OUT instructions to OTE."). In response to such a request, the generative AI component can update the recommended control code displayed in window 904 to make the requested substitution. Other types of edits that can be requested and implemented in this manner can include, for example, changes to selected parameter values associated with program instructions included in the code (e.g., timer delay values, counter values, etc.), duplication of a line or rung of control code, addition or removal of a line or rung of code, modifications to variable names or addresses, or other such edits.

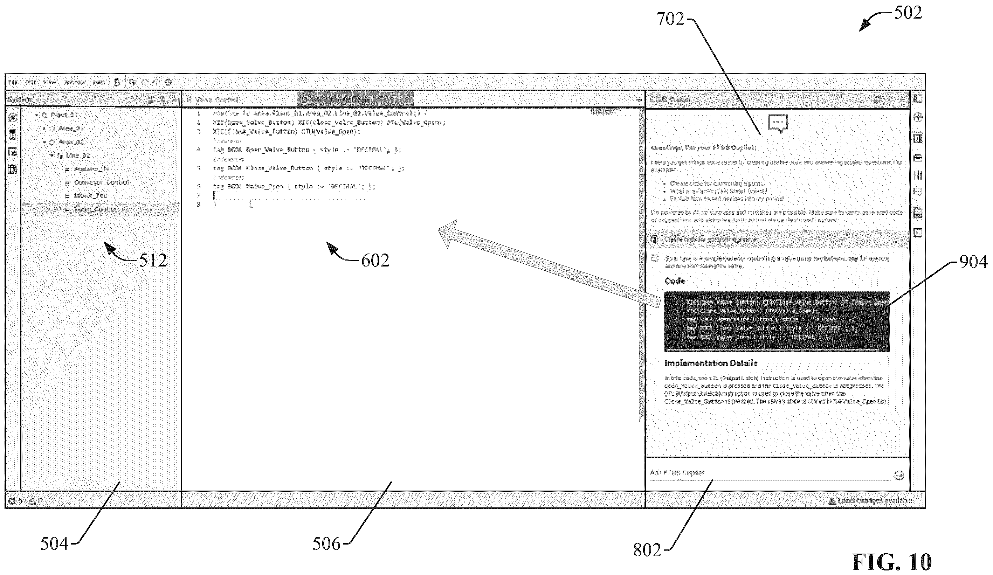

When the user is satisfied with the control code recommended by the copilot, the user can choose to integrate the recommended code into their larger system project 302. FIG. 10 is a view of the development interface 502 depicting integration of the generated control code into the user's control code 602. At any time, the user can instruct the development interface 502 to copy the generated control code displayed in window 904 to the control code 602 displayed in the workspace canvas 506. The generated code can be inserted at a specified location of the control code 602 or added to the project as its own routine. In the example depicted in FIG. 10, both the generated control code in window 904 and the primary control code 602 are displayed in a text-based format. However, the development interface 502 allows the user to selectively switch between a text-based view and a graphical view (e.g., ladder logic) of the control code, allowing the user to view and edit control code in either format. In some embodiments, the copilot window 702 can render suggested control code in window 904 in both text-based and graphical formats for user review.

Some embodiments of the IDE system 202 allow the user either define a target industrial controller for the project 302 as an initial step and to write or generate control code 602 for that controller definition, or to develop control code 602 in the workspace canvas 506 prior to assigning the code 602 to a specific controller instance defined for the project 302. In the either case, data tags defined in the control code 602 that correspond to digital or analog inputs or outputs of the controller can be mapped to appropriate I/O addresses of the controller's I/O modules by the IDE system 202 when the control code 602 is assigned to the controller instance. In some embodiments, this mapping between I/O data tags and physical I/O points of the industrial controller can also be performed using natural language instructions. For example, the user can submit a natural language prompt indicating that a digital input tag representing a pushbutton input defined in the control code 602 is to be mapped to a specified digital input address (or a specified input module) of an industrial controller defined as part of the project 302. In response to this prompt, the generative AI component 210 can define this mapping as part of the project 302, such that when the control code 602 is executed on the physical industrial controller, input signals to the specified digital input will control the value of the mapped data tag within the control routine.

In addition to generating recommended control code in accordance with a user's natural language prompts, the generative AI component 210 can also answer the user's questions about the development platform itself. These questions can include, for example, requests for recommended program instructions, AOIs, or other available services of the IDE system 202 capable of performing a control or programmatic task specified by the prompt. As in the case of control code recommendations, the generative AI component 210 can generate an answer to such questions by suggesting one or more recommended program instructions (or AOIs) capable of satisfying the user's request together with a natural language description of the proposed instructions, including an explanation of how to use the instruction to perform the task described by the user's prompt. If the recommended program instruction or AOI has associated configuration parameters, the response generated by the generative AI component 210 can include recommended parameter settings for the instruction based on the task for which the instruction will be used (as specified by the user's initial prompt). In another example, the user can submit a natural language prompt asking how to perform certain tasks within the development platform, or requesting an explanation of a programmatic element or tool supported by the platform (e.g., "Show me an example of how to use a smart object," "Can this instruction be used to regulate my motor control signal?" etc. ) and in response the generative AI component 210 can generate an explanation or answer to the user's prompt, rendering the response in the copilot window 702 as a natural language output.

The IDE system 202 can also support the use of generative AI to perform other project development tasks in accordance with the user's natural language instructions, as an alternative to interacting with the IDE system's menu-based tools. For example, the user can submit a natural language prompt instructing the system 202 to add an instance of a new device (e.g., an industrial controller, an I/O module, etc.) to the system project 302 currently being developed within the project development interface 502. The generative AI component 210 can respond to this request by creating a node in the system view navigation tree 512 representing the new device specified by the prompt. The system 202 can also create other types of project elements in this manner, including but not limited to new data types, new system projects 302, new location or plant nodes within the navigation tree 512, or other such project elements.

Some embodiments of the IDE system 202 can allow the user to submit feedback indicating the degree to which a response generated by the generative AI model 226 in response to the user's prompt satisfies the user's needs. In some scenarios, the user interface component 204 can render a feedback window after the response has been given, either automatically or in response to a user's request to submit feedback, and the user can rate the degree to which the response addressed the user's issue as specified by the prompt. The generative AI component 210 can use this feedback to further train or tune the model 226 to improve future responses to similar prompts.

While the examples described above considered scenarios in which the generative AI component 210 and its generative AI model 226 generate control code based on a user's natural language prompts, some embodiments of the IDE system 202 can also accept image data as part of design input 312, and the generative AI model 226 can translate content of the image data into control code. For example, an image of a piping and instrumentation diagram (P&ID) can be submitted to the system 202, and the model can translate this image into control code capable of performing monitoring and control of the system represented by the P&ID.

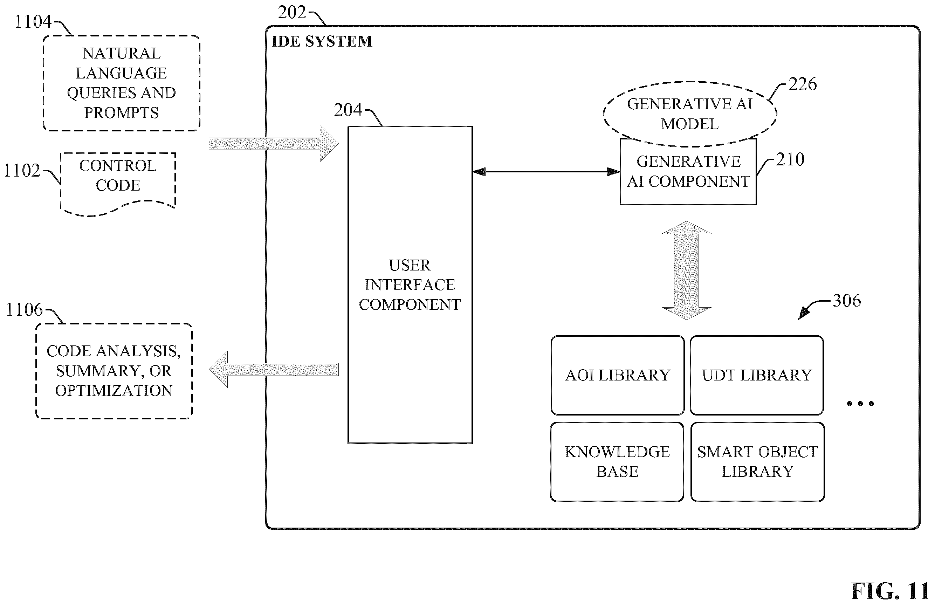

In addition to assisting with development of a new control code for a system project 302, the generative AI functions of IDE system 202 can also be used to analyze or optimize existing control code or control system projects, allowing users to submit prompts directed to the code. FIG. 11 is a diagram illustrating generative AI analysis of control code 1102 submitted to the IDE system 202. In some scenarios, control code 1102 to be analyzed by the IDE system 202 can comprise code that was developed within the development platform of the IDE system 202 itself. Alternatively, control code 1102 that was developed using another development platform can be imported into the IDE system 202 for analysis (as depicted in FIG. 11). The latter case may be useful if a user has inherited unfamiliar control code 1102 that was developed by another user and wishes to learn about the code 1102 or to optimize the code 1102 to improve a specified performance metric.

The IDE system 202 allows the user to submit natural language queries or other prompts 1104 against the control code 1102, and the generative AI component 210, using model 226, can generate responses 1106 to these prompts 1104 based on analysis of the code 1102 guided by the prompts 1104. Depending on the nature of the prompt 1104, these responses 1106 may be informational natural language answers to questions about the code 1102, summaries of the code 1102, recommendations for modifying the code 1102 in a manner that solves a performance issue specified by the prompt 1104, or other such responses 1106.

In an example scenario, a user may be unfamiliar with control code 1102 that is currently in service as part of an automation system, and wishes to learn about the code's functionality. To this end, the user can submit, as natural language prompts 1104, questions about specified sections of the code 1102 (e.g., "Explain the Conveyor routine to me."). In response to such questions, the generative AI component 210 can generate and render a natural language to the question based on analysis of the code 1102 performed by the model 226 based on the user's prompt 1104. In another example, the user may submit, as a prompt 1104, a question inquiring which section of the code 1102 is responsible for a specified control functionality (e.g., "Where is the routine the controls Conveyor 8?"). In response to this prompt, the generative AI component 210 can cause the development interface 502 to navigate to the relevant portion or routine of the control code 1102, and can also generate and render an explanation of how the relevant portion of the control code 1102 operates to perform the function in question. In a similar manner, the user can ask questions about devices or equipment referenced by the control code 1102 (e.g., "Explain Agitator 99"), and the generative AI component 210 will provide the requested explanation. As in the case of generative AI-assisted code generation, the generative AI component 210 can leverage any of the libraries 306 discussed above in connection with analyzing the code 1102 to learn its various functions and naming conventions. The responses 1106 generated by the generative AI model 226 can also be based on a contextual analysis of the code 1102, which determines the type of control application or industrial vertical for which the code 1102 was created, as will be described in more detail below.

In addition to responding to prompts 1104 directed to learning about the control code 1102, the generative AI component 210 can also be configured to recommend or implement modifications to the control code 1102 based on natural language prompts 1104 submitted by the user. In an example scenario, the user may have acquired or inherited control code 1102 that may not conform to a desired industry or in-house programming standard, in terms of naming conventions or program structure preferences. The user can submit a prompt 1104 instructing the generative AI model 226 to modify the code 1102 as needed to comply with a specified standard (e.g., a standard defined in one of the libraries 306). In response, the generative AI component 210 can perform the necessary modification, including renaming variables or restructuring portions of the code, to yield modified control code 1102 complying with the required standard. The generative AI component 210 may also render a natural language response 1106 summarizing changes made to the code 1102 to bring the code 1102 into compliance. At least some of these modifications can be performed based on industrial knowledge encoded in the generative AI model 226, which allows the model 226 to perform contextual analysis of the code 1102 to learn the type of industrial application or vertical for which the code 1102 was written. This information may be a factor in determining which industry standards apply to the code 1102 and how the code 1102 should be modified for compliance with those standards.

In another example, the generative AI component 210 can leverage the model's industrial training, together with the content of libraries 306, to recommend or implement modifications to the control code 1102 designed to improve a performance metric specified by the user via a prompt 1104, or to solve another type of specified problem with the code 1102. For example, the control code 1102 may be a control program that is currently in service on the plant floor - that is, the code 1102 has been deployed to an industrial controller 118 and is being used to monitor and control its corresponding automation system - and the user may seek recommendations for modifying the code 1102 to correct performance issues observed on the automation system. In such scenarios, the user may submit a prompt 1104 asking the system 202 to recommend modifications to the code 1102 that will improve a specified performance metric (e.g., "How can I reduce downtime occurrences of the #2 stamping press?", "How can I reduce energy consumption of the system?", "How can I reduce part cycle time without risking an increase in machine abnormal conditions?" etc.). In response to this prompt 1104, the generative AI component 210, using model 226 and any relevant libraries 306, can generate and render recommendations for modifying the code 1102 in a manner expected to satisfy the criteria indicated in the prompts 1104. In some cases, the generative AI model 226 offer multiple proposed solutions to the problem defined by the prompt 1104, together with explanations of the relative benefits or potential downsides of the various offered solutions.

In some cases, the user's prompt 1104 may be less targeted toward a specific performance problem to be solved, but instead may be a request for the generative AI model 226 to analyze the control code 1102 to identify opportunities to optimize aspects of the code's performance, improve the clarity of the code 1102, or otherwise streamline the code 1102. In response to such requests, the model 226 can, for example, identify portions of the code 1102 that can be rewritten to reduce the overall amount of code without substantively altering the functionality performed by those portions of the code 1102, identify portions of the code 1102 that can be rewritten to reduce the number or distance of machine movements (and thus the amount of machine wear) used to carry out a control function, identify inconsistent variable naming conventions, or identify other such issues. Based on this assessment, the generative AI component 210 can either recommend or implement modifications to the code 1102 to address these identified issues.

In addition to control code 1102, some embodiments of the IDE system 202 can allow the user to submit other types of documentation for analysis by the generative AI model 226. For example, users may submit functional specification documentation for a new or existing automation system, and submit prompts 1104 directed to these functional specifications. These prompts 1104 can comprise questions about the automation system described by the functional specifications (e.g., "What are the control areas requiring control code to be generated?") as well as prompts 1104 that instruct the model 226 to generate control code for performing control functions required by the functional specifications.

The generative AI component 210 can access any of the libraries 306 described above in connection with generating control code that satisfies the user's prompts (as described above in connection with FIGs. 5-11) as well as processing user prompts 1104 submitted against existing control code 1102 (as described above in connection with FIG. 11). These libraries 306 can include but are not limited to program instruction sets, libraries of pre-tested control code samples for various types of control or programmatic functions, programming manuals, industrial standards definitions (both global standards and customer-specific in-house standards), or other such libraries or data sources. In some cases, these libraries 306 can include customer-specific libraries that contain examples of a customer's preferred coding standards, functional standards, AOIs, program documentation standards, or other such customer-specific information. The generative AI component model 226 can reference these customer-specific libraries in connection with generating control code recommendations (or recommendations for control code edits) so that all recommended control code conforms to the customer's in-house standards in terms of control program formatting, program documentation standards, variable naming conventions, AOIs or instructions used, UDTs, etc. The generative AI component 210 can also reuse prewritten code stored in these libraries 306 where appropriate to satisfy the functional requirements specified by the user's prompt.

As noted above, the generative AI model 226 can be trained with industry-specific knowledge of various types of industrial control applications, as well as any vertical-specific standards or requirements associated with specific industrial verticals (e.g., food and beverage, pharmaceuticals, automotive, textiles, mining, die casting, etc.). This training allows the model 226 to generate control code recommendations for a user's system project 302, or to answer questions about the project 302 or code, based on an understanding of the type of industrial application or vertical for which the project 302 is being developed. To this end, the generative AI model 210 can perform contextual analysis on the user's existing control code or system project 302 to infer a type of industrial application for which the project is being developed, and can generate responses to user prompts - including control code recommendations or proposed edits - based on this application context. To carry out this contextual analysis, the generative AI model 226 can be designed to create references to internal project components, such as library instances, tags, states, and other relevant information.

During development of a system project 302, this contextual information, this contextual information can be used by the generative AI model 226 to generate responses to user prompts - including recommendations for new control code or answers to the user's questions about the code - based in part on the portions of the system project 302 or control code that have already been developed, from which the model 226 can ascertain the type of industrial application for which the project 302 is being created. For example, the model 226 may be aware of standard control routines that are typically required for the type of control application being developed, and can generate recommendations to add any such routines that are not already present in the project 302. The contextual information may also dictate the model's responses to the user's questions about the control code and its functions; such that the system's answers to these questions explain the code's functionality within the context of the specific type of industrial application that the project 302 for which the project 302 is being developed.

The generative Al-enabled industrial IDE system described herein simplifies the method by which industrial control code is written, configured, optimized, and documented. The IDE system's interface accepts natural language as input for requesting guidance or explicit coding recommendations for an industrial control application, allowing non-programmers to create accurate control code satisfying the application's functional requirements.

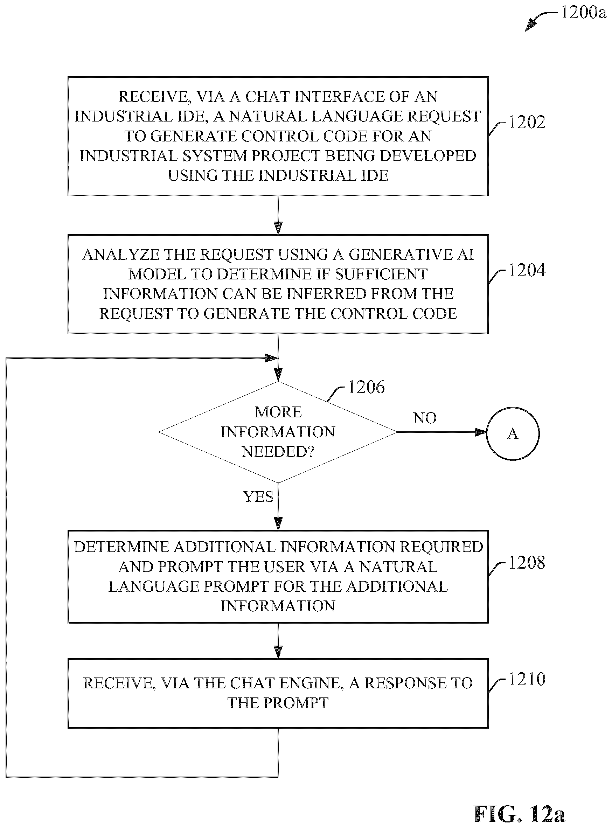

FIGs 12a-13 illustrate various methodologies in accordance with one or more embodiments of the subject application. While, for purposes of simplicity of explanation, the one or more methodologies shown herein are shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 12a illustrates a first part of an example methodology 1200a for using generative AI to assist in creation of industrial control code within an industrial IDE system. Initially, at 1202, a natural language request to generate control code for an industrial system project being developed using an industrial IDE system is received via a chat interface associated with the industrial IDE system. This initial request may be worded at any level of detail or granularity, and may specify such information as the type of control function for which the component is required (e.g., valve control, conveyor control, web tension control, stamping press control, batch processing, etc.), a specific type of product or material to be produced by the automation system for which the control code is being designed, the hardware platform on which the control code will execute (e.g., a specific vendor or model of industrial controller), the types and models of industrial devices and assets that make up the automation system for which the control code is being designed, or other such information.

At 1204, the request is analyzed by the IDE system using a generative AI model to determine if sufficient information can be inferred from the request to generate the control code. At 1206, a determination is made as to whether more information is needed from the user in order to generate accurate control code satisfying the user's requirements. If additional information is required (YES at step 1206), the methodology proceeds to step 1208, where the generative AI model is used to determine the additional information required, and to render a natural language prompt designed to guide the user toward providing the additional information. At 1210, a response to the prompt generated at step 1208 is received via the chat engine.

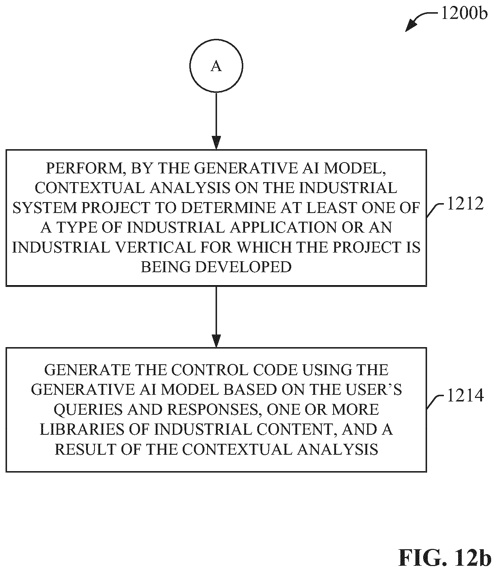

Steps 1206-1210 are repeated as a natural language dialog with the user until sufficient information translatable to a set of functional requirements for the requested code has been obtained. When no further information is required from the user (NO at step 1206), the methodology proceeds to the second part 1200b illustrated in FIG. 12b. At 1212, the generative AI model performs contextual analysis of the industrial system project currently being developed to determine at least one of a type of industrial application or an industrial vertical for which the project is being developed. In this regard, the generative AI model can be trained with industrial knowledge of control coding or industrial standards associated with various types of industrial applications or verticals, and can formulate the response to the user's requested based in part on this encoded industrial expertise and a determination of which standards apply to the system project for which the control code is being generated. At 1214, the industrial IDE system generates the requested control code using the generative AI model based on the user's initial query received at step 1202, subsequent responses received at step 1210, results of the contextual analysis performed at step 1212, and one or more libraries of industrial content accessible to the generative AI model. These libraries can include, for example, libraries of add-on instructions (AOIs) or other program instructions that that encode control or computational functionality and that can be added as elements to control routines, libraries of documented control code samples that encapsulate reusable control code, libraries of user-defined data types (UDTs), libraries of product manuals for various types industrial devices or software platforms, help files, vendor knowledgebases, training materials, industrial standards definitions, or other such libraries.

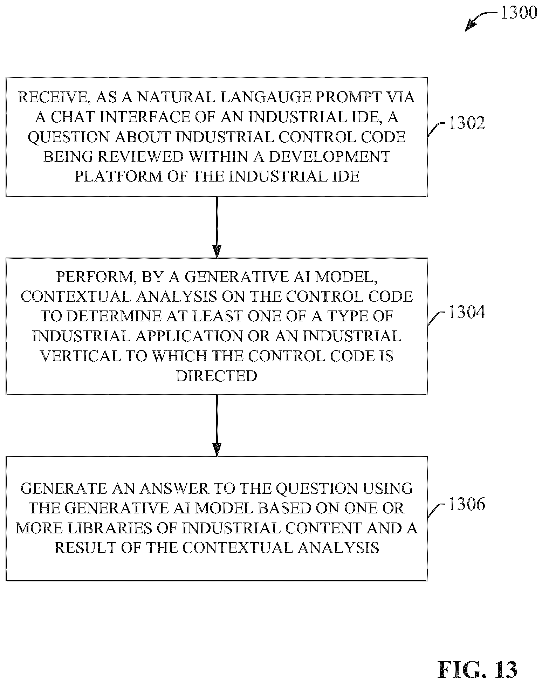

FIG. 13 illustrates an example methodology 1300 for using a generative AI model to respond to user's natural language prompts submitted against industrial control code. Initially, at 1302, a natural language prompt is received via a chat interface of an industrial IDE, the prompt comprising a question about industrial control code being reviewed within a development platform of the industrial IDE system. For example, the user can submit, as natural language prompts 1104, questions about specified sections of the code 1102. Example questions that can be submitted in this manner include a request for an explanation of specified portions or routines of the control code, requests for an explanation of how a specified device is monitored and controlled by the control code, a request to navigate to a portion or routine of the control code responsible for controlling a specified machine or device, or other such questions about the control code.

At 1304, analysis of the control code can be performed by a generative AI model associated with the industrial IDE system to determine at least one of a type of industrial application or an industrial vertical to which the control code is directed (similar to step 1212 of methodology 1200b). At 1306, the IDE system generates an answer to the question submitted at step 1302 using the generative AI model based on a result of the contextual analysis performed at step 1304 and one or more libraries of industrial content (similar to the libraries described above in connection with step 1214 of methodology 1200b).

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

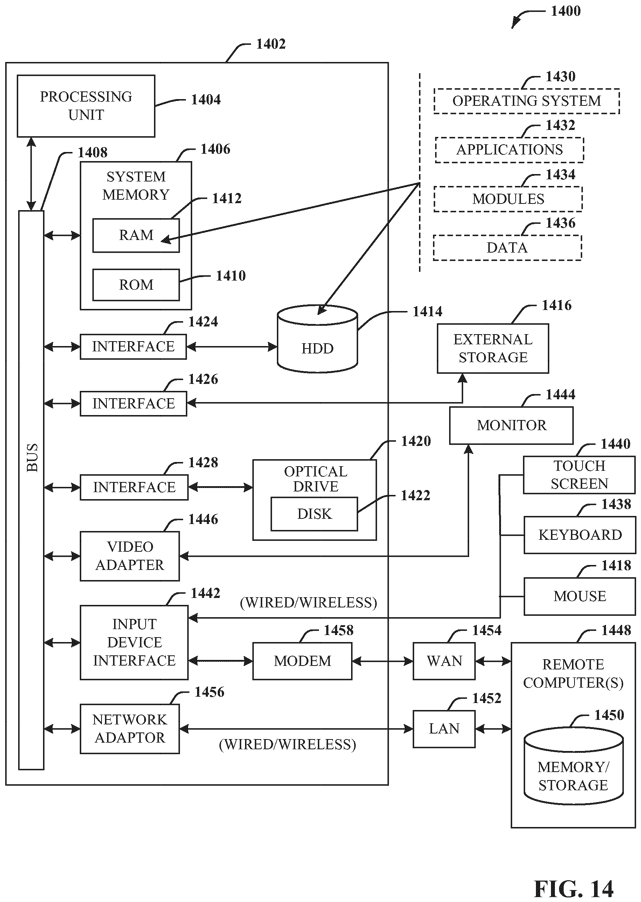

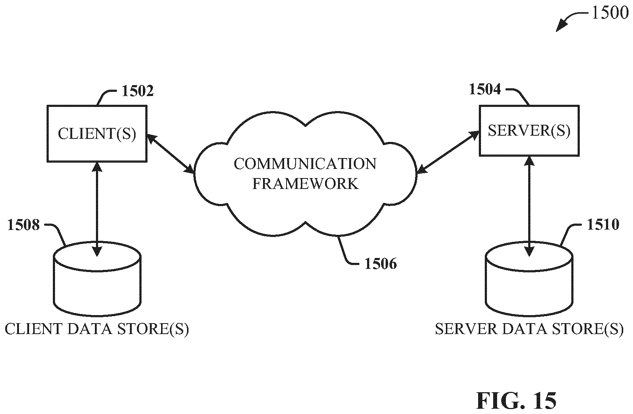

In order to provide a context for the various aspects of the disclosed subject matter, FIGs. 14 and 15 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 14, the example environment 1400 for implementing various embodiments of the aspects described herein includes a computer 1402, the computer 1402 including a processing unit 1404, a system memory 1406 and a system bus 1408. The system bus 1408 couples system components including, but not limited to, the system memory 1406 to the processing unit 1404. The processing unit 1404 can be any of various commercially available processors. Dual microprocessors and other multi-processor architectures can also be employed as the processing unit 1404.

The system bus 1408 can be any of several types of bus structure that can further interconnect to a memory bus (with or without a memory controller), a peripheral bus, and a local bus using any of a variety of commercially available bus architectures. The system memory 1406 includes ROM 1410 and RAM 1412. A basic input/output system (BIOS) can be stored in a non-volatile memory such as ROM, erasable programmable read only memory (EPROM), EEPROM, which BIOS contains the basic routines that help to transfer information between elements within the computer 1402, such as during startup. The RAM 1412 can also include a highspeed RAM such as static RAM for caching data.

The computer 1402 further includes an internal hard disk drive (HDD) 1414 (e.g., EIDE, SATA), one or more external storage devices 1416 (e.g., a magnetic floppy disk drive (FDD) 1416, a memory stick or flash drive reader, a memory card reader, etc.) and an optical disk drive 1420 (e.g., which can read or write from a CD-ROM disc, a DVD, a BD, etc.). While the internal HDD 1414 is illustrated as located within the computer 1402, the internal HDD 1414 can also be configured for external use in a suitable chassis (not shown). Additionally, while not shown in environment 1400, a solid state drive (SSD) could be used in addition to, or in place of, an HDD 1414. The HDD 1414, external storage device(s) 1416 and optical disk drive 1420 can be connected to the system bus 1408 by an HDD interface 1424, an external storage interface 1426 and an optical drive interface 1428, respectively. The interface 1424 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1402, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1412, including an operating system 1430, one or more application programs 1432, other program modules 1434 and program data 1436. All or portions of the operating system, applications, modules, and/or data can also be cached in the RAM 1412. The systems and methods described herein can be implemented utilizing various commercially available operating systems or combinations of operating systems.

Computer 1402 can optionally comprise emulation technologies. For example, a hypervisor (not shown) or other intermediary can emulate a hardware environment for operating system 1430, and the emulated hardware can optionally be different from the hardware illustrated in FIG. 14. In such an embodiment, operating system 1430 can comprise one virtual machine (VM) of multiple VMs hosted at computer 1402. Furthermore, operating system 1430 can provide runtime environments, such as the Java runtime environment or the .NET framework, for application programs 1432. Runtime environments are consistent execution environments that allow application programs 1432 to run on any operating system that includes the runtime environment. Similarly, operating system 1430 can support containers, and application programs 1432 can be in the form of containers, which are lightweight, standalone, executable packages of software that include, e.g., code, runtime, system tools, system libraries and settings for an application.

Further, computer 1402 can be enable with a security module, such as a trusted processing module (TPM). For instance with a TPM, boot components hash next in time boot components, and wait for a match of results to secured values, before loading a next boot component. This process can take place at any layer in the code execution stack of computer 1402, e.g., applied at the application execution level or at the operating system (OS) kernel level, thereby enabling security at any level of code execution.

A user can enter commands and information into the computer 1402 through one or more wired/wireless input devices, e.g., a keyboard 1438, a touch screen 1440, and a pointing device, such as a mouse 1418. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1404 through an input device interface 1444 that can be coupled to the system bus 1408, but can be connected by other interfaces, such as a parallel port, an IEEE 1394 serial port, a game port, a USB port, an IR interface, a BLUETOOTH^{®} interface, etc.

A monitor 1444 or other type of display device can be also connected to the system bus 1408 via an interface, such as a video adapter 1446. In addition to the monitor 1444, a computer typically includes other peripheral output devices (not shown), such as speakers, printers, etc.

The computer 1402 can operate in a networked environment using logical connections via wired and/or wireless communications to one or more remote computers, such as a remote computer(s) 1448. The remote computer(s) 1448 can be a workstation, a server computer, a router, a personal computer, portable computer, microprocessor-based entertainment appliance, a peer device or other common network node, and typically includes many or all of the elements described relative to the computer 1402, although, for purposes of brevity, only a memory/storage device 1450 is illustrated. The logical connections depicted include wired/wireless connectivity to a local area network (LAN) 1452 and/or larger networks, e.g., a wide area network (WAN) 1454. Such LAN and WAN networking environments are commonplace in offices and companies, and facilitate enterprise-wide computer networks, such as intranets, all of which can connect to a global communications network, e.g., the Internet.

When used in a LAN networking environment, the computer 1402 can be connected to the local network 1452 through a wired and/or wireless communication network interface or adapter 1456. The adapter 1456 can facilitate wired or wireless communication to the LAN 1452, which can also include a wireless access point (AP) disposed thereon for communicating with the adapter 1456 in a wireless mode.

When used in a WAN networking environment, the computer 1402 can include a modem 1458 or can be connected to a communications server on the WAN 1454 via other means for establishing communications over the WAN 1454, such as by way of the Internet. The modem 1458, which can be internal or external and a wired or wireless device, can be connected to the system bus 1408 via the input device interface 1442. In a networked environment, program modules depicted relative to the computer 1402 or portions thereof, can be stored in the remote memory/storage device 1450. It will be appreciated that the network connections shown are example and other means of establishing a communications link between the computers can be used.

When used in either a LAN or WAN networking environment, the computer 1402 can access cloud storage systems or other network-based storage systems in addition to, or in place of, external storage devices 1416 as described above. Generally, a connection between the computer 1402 and a cloud storage system can be established over a LAN 1452 or WAN 1454 e.g., by the adapter 1456 or modem 1458, respectively. Upon connecting the computer 1402 to an associated cloud storage system, the external storage interface 1426 can, with the aid of the adapter 1456 and/or modem 1458, manage storage provided by the cloud storage system as it would other types of external storage. For instance, the external storage interface 1426 can be configured to provide access to cloud storage sources as if those sources were physically connected to the computer 1402.

The computer 1402 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 15 is a schematic block diagram of a sample computing environment 1500 with which the disclosed subject matter can interact. The sample computing environment 1500 includes one or more client(s) 1502. The client(s) 502 can be hardware and/or software (e.g., threads, processes, computing devices). The sample computing environment 1500 also includes one or more server(s) 1504. The server(s) 1504 can also be hardware and/or software (e.g., threads, processes, computing devices). The servers 1504 can house threads to perform transformations by employing one or more embodiments as described herein, for example. One possible communication between a client 1502 and servers 1504 can be in the form of a data packet adapted to be transmitted between two or more computer processes. The sample computing environment 1500 includes a communication framework 1506 that can be employed to facilitate communications between the client(s) 502 and the server(s) 1504. The client(s) 1502 are operably connected to one or more client data store(s) 508 that can be employed to store information local to the client(s) 2302. Similarly, the server(s) 1504 are operably connected to one or more server data store(s) 1510 that can be employed to store information local to the servers 1504.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

## Claims

1. A system, comprising:
a memory that stores executable components and a generative artificial intelligence (Al) model; and
a processor, operatively coupled to the memory, that executes the executable components, the executable components comprising:
a user interface component configured to receive, as natural language input, a prompt comprising a request for control code for an industrial system project in development, wherein the request specifies one or more requirements of the control code;
a generative Al component configured to perform contextual analysis on the industrial system project to determine at least one of a type of industrial application or an industrial vertical for which the industrial system project is being developed, and to generate, using the generative Al model, control code inferred to satisfy the one or more requirements based on analysis of the prompt and a result of the contextual analysis; and
a project generation component configured to integrate the control code into the industrial system project.

2. The system of claim 1, wherein the generative Al component is configured to generate the control code further based on content of one or more libraries, the one or more libraries comprising at least one of a program instruction library, a library of control code samples, a library of user-defined data types, a library of industrial device product manuals, a help file library, a library of customer-specific training manuals, a library of industrial standard definitions, or a library of customer-specific plant standards.

3. The system of claim 1 or 2, wherein the prompt specifies at least one of a control function to be performed by the control code, a type of equipment to be controlled by the control code, or a format for the control code.

4. The system of one of claims 1 to 3, wherein
the generative AI component is further configured to generate, using the generative Al model, natural language implementation details relating to the control code based on the analysis of the prompt and the result of the contextual analysis, and
the user interface component is configured to render the control code and the natural language implementation details.

5. The system of one of claims 1 to 4, at least one of:
wherein the generative Al component is configured to generate the control code to align with at least one of an industrial standard or a customer-specific standard;
wherein the industrial vertical is at least one of food and beverage, pharmaceuticals, automotive, textiles, mining, aerospace, marine, or die casting; and
wherein the user interface component is configured to render the control code in both a text format and a graphical format.

6. The system of one of claims 1 to 5, wherein one of:
the prompt is a first prompt,
the user interface component is further configured to receive, as another natural language input, a second prompt requesting an edit to the control code, and
the generative Al component is configured to modify, using the generative Al model, the control code in accordance with the edit;
the prompt is a first prompt,
the user interface component is further configured to receive, as another natural language input, a second prompt asking a question about previously written control code included as part of the industrial system project, and
the generative AI component is further configured to generate, using the generative Al model, an answer to the question based on analysis of the previously written control code and the result of the contextual analysis; and
the prompt is a first prompt,
the user interface component is further configured to receive, as another natural language input, a second prompt requesting a proposed modification to the industrial system project that will address a performance issue specified in the second prompt,
the generative Al component is further configured to generate, using the generative Al model, one or more proposed modifications to the industrial system project designed to address the performance issue based on analysis of the industrial system project and the result of the contextual analysis, and
the user interface component is configured to render the one or more proposed modifications as natural language descriptions.

7. A method, comprising:
receiving, as natural language input by an industrial integrated development environment (IDE) system comprising a processor, a prompt comprising a request for control code for an industrial system project being developed, wherein the request specifies one or more requirements of the control code;
performing, by the industrial IDE system using a generative artificial intelligence (Al) model, contextual analysis on the industrial system project to determine at least one of a type of industrial application or an industrial vertical for which the industrial system project is being developed;
generating, by the industrial IDE system using the generative Al model, control code determined to satisfy the one or more requirements based on analysis of the prompt and a result of the contextual analysis; and
integrating, by the industrial IDE system, the control code into the industrial system project.

8. The method of claim 7, wherein the generating comprises generating the control code further based on content of one or more libraries, the one or more libraries comprising at least one of a program instruction library, a library of control code samples, a library of user-defined data types, a library of industrial device product manuals, a help file library, a library of customer-specific training manuals, a library of industrial standard definitions, or a library of customer-specific plant standards.

9. The method of claim 7 or 8, wherein the prompt specifies at least one of a control function to be performed by the control code, a type of equipment to be controlled by the control code, or a format for the control code.

10. The method of one of claims 7 to 9, further comprising:
generating, by the industrial IDE system using the generative Al model, natural language implementation details relating to the control code based on the analysis of the prompt and the result of the contextual analysis, and
rendering, by the industrial IDE system the control code and the natural language implementation details.

11. The method of one of claims 7 to 10, at least one of:
wherein the generating comprises generating the control code to align with at least one of an industrial standard or a customer-specific standard; and
wherein the industrial vertical is at least one of food and beverage, pharmaceuticals, automotive, textiles, mining, aerospace, marine, or die casting.

12. The method of one of claims 7 to 11, wherein
the prompt is a first prompt, and
the method further comprises:
receiving, by the industrial IDE system as another natural language input, a second prompt requesting an edit to the control code, and
modifying, by the industrial IDE system using the generative Al model, the control code in accordance with the edit.

13. The method of one of claims 7 to 12, wherein
the prompt is a first prompt, and
the method further comprises:
receiving, by the industrial IDE system as another natural language input, a second prompt asking a question about previously written control code included as part of the industrial system project, and
generating, by the industrial IDE system using the generative Al model, an answer to the question based on analysis of the previously written control code and the result of the contextual analysis.

14. A non-transitory computer-readable medium having stored thereon instructions that, in response to execution, cause an industrial integrated development environment (IDE) system comprising a processor to perform operations, the operations comprising:
receiving a natural language prompt requesting control code for an industrial system project being developed, wherein the natural language prompt describes one or more requirements of the control code;
performing, using a generative artificial intelligence (Al) model, contextual analysis on the industrial system project to determine at least one of a type of industrial application or an industrial vertical for which the industrial system project is being developed;
generating, using the generative Al model, control code that satisfies the one or more requirements based on analysis of the prompt and a result of the contextual analysis; and
integrating the control code into the industrial system project.

15. The non-transitory computer-readable medium of claim 14, wherein the generating comprises generating the control code further based on content of one or more libraries, the one or more libraries comprising at least one of a program instruction library, a library of control code samples, a library of user-defined data types, a library of industrial device product manuals, a help file library, a library of customer-specific training manuals, a library of industrial standard definitions, or a library of customer-specific plant standards.
